# NOUVEAU FASCICULE DE BREVET EUROPEEN

(11) **EP 1 741 943 B2**
(45) Date de publication et mention de la décision concernant l'opposition: **06.04.2016**
(45) Mention de la délivrance du brevet: 16.11.2011
(21) Numéro de dépôt: 06291085.6
(22) Date de dépôt: 30.06.2006
(51) Int. Cl.: F16C 19/55, F03D 1/06, F03D 80/00

(54) **Palier d'éolienne à transmission d'efforts**
Lageranordnung zur Kraftübertragung einer Windenergieanlage
Bearing arrangement for power transmission of a wind turbine

(30) Priorité: 04.07.2005 FR 0507110
(43) Date de publication de la demande: 10.01.2007
(73) Titulaire: Defontaine, 85530 La Bruffière (FR)
(72) Inventeur: Errard, Germain, 44210 Pornic (FR); Jacquemont, Eric, 44190 Clisson (FR); Terve, Daniel, 44230 Saint Sebastien (FR); Chatry, Didier, 85530 La Bruffière (FR)
(74) Mandataire: Novagraaf Technologies

(56) Documents cités:
- EP-A- 0 158 015
- EP-A- 1 266 137
- EP-A- 1 426 639
- EP-A- 1 467 111
- DE-A1- 1 622 154
- DE-A1- 10 141 667

## Description

L'invention concerne des ensembles en particulier pour éolienne selon les préambules des revendications indépendantes 1 et 4, et se rapporte à l'utilisation notamment d'un palier pivotant de servomoteur pour une pale d'un moyeu de rotor d'une éolienne.

A partir de EP-A-1 266 137, on connaît un tel ensemble pour éolienne comprenant un palier pivotant de servomoteur interposé entre un moyeu de rotor d'éolienne et une pale d'éolienne, cette pale et le palier présentant un axe, ledit ensemble comprenant:
- une première et une seconde bagues de roulement présentant des diamètres différents, parallèlement à une direction radiale à l'axe de la pale,
- une partie de liaison intégrée au moyeu de rotor et interposée entre celui-ci et les bagues et s'étendant, parallèlement à ladite direction radiale à l'axe de la pale, en regard de ces première et seconde bagues auxquelles elle est fixée,
- une troisième bague de roulement située, radialement à l'axe de la pale, entre les première et deuxième bagues de roulement, cette troisième bague de roulement étant fixée à la pale.

Sur les éoliennes en particulier, les paliers subissent de gros efforts. Quant aux pales de ces éolienne, elles subissent des efforts importants non seulement dans l'axe de la/chaque pale (efforts axiaux), mais également radialement à l'axe de la pale et du moyeu de rotor (efforts radiaux ou centrifuges).

Les vitesses de rotation, les dimensions toujours croissantes des éoliennes, les efforts imposés par le vent, mais également ceux liés à l'angle de calage des pales imposent une résistance toujours accrue des paliers.

Concernant l'angle de calage précité, il il est courant que les pales puissent pivoter d'une dizaine de degrés autour de leur axe d'allongement pour favoriser le rendement en fonction de la direction du vent.

La manière d'agencer les bagues pour les roulements et les fixations entre ces bagues, le moyeu de rotor et la pale sont des éléments majeurs pour le fonctionnement de l'éolienne.

C'est dans ce contexte qu'un objet de l'invention est d'améliorer ces points par rapport aux solutions existantes en favorisant la tenue mécanique des paliers, les conditions de fixation et les coûts.

Une solution proposée consiste en ce que, sur l'ensemble précité palier/moyeu de rotor/pale d'éolienne, la partie précitée de liaison s'étende, parallèlement à ladite direction radiale à l'axe de la pale, en regard des première et seconde bagues, lesquelles sont fixées ensemble sur cette partie de liaison par des premiers et seconds moyens de fixation, respectivement.

Selon une autre approche, est également concerné un ensemble, notamment pour éolienne, comprenant un palier pivotant interposé entre une première et une deuxième pièces. Sur untel ensemble connu, la partie précédente de liaison est remplacée par une pièce de liaison interposée entre la deuxième pièce et les première et seconde bagues et s'étendant, suivant une direction radiale à l'axe de ladite deuxième pièce, en regard de ces première et seconde bagues avec lesquelles elle est liée. La deuxième pièce « remplace » la pale de l'éolienne, la première le rotor.
Pour résoudre les mêmes problèmes dans d'autres applications où de gros efforts sont subis, il est proposé ici que l'une au moins parmi les première et seconde bagues soit fixée sur la pièce de liaison sans être fixée sur la deuxième pièce à laquelle elle est toutefois liée par l'intermédiaire de cette pièce de liaison.

Ainsi, la deuxième pièce (pale) sera exclusivement fixée à latroisième bague (intermédiaire) et ne sera donc pas fixée directement aux première et deuxième bagues extrêmes.

Bien que formulées suivant des caractéristiques différentes, ces deux solutions, respectivement avec pièce de liaison et avec partie de liaison, apportent une solution au même problème déjà énoncé : améliorer la tenue sous efforts des paliers, en particulier radialement à l'axe de rotation de la/chaque pièce (pale, sur des éoliennes) sur des installations (grues, gros engins de chantiers....) de plus en plus puissantes donc placées sous contrainte mécanique croissante.

Côté pale/seconde pièce (via ladite pièce de liaison) ou côté moyeu/première pièce (via ladite partie de liaison), il y a systématiquement fixation indirecte à eux des première et deuxième bagues, avec au moins un passage d'effort commun aux deux bagues.

Dans le second cas, on conseillera en outre avantageusement:
- que la troisième bague de roulement soit fixée (directement donc) à la pale par des troisièmes moyens de fixation,
- et que les premiers et seconds moyens de fixation soient disposés, ensemble, sur ladite partie de liaison et respectivement sur les première et seconde bagues, à une distance radiale par rapport à l'axe de la pale qui est différente de celle qui sépare de cet axe lesdits troisièmes moyens de fixation.

Par ailleurs, il sera alors favorable que, le moyeu de rotor présentant un axe parallèle à celui de la pale, suivant une section parallèle à cet axe du moyeu, ladite partie de liaison définisse un prolongement en T intégré au moyeu de rotor et dont la barre reçoit les fixations entre cette partie de liaison et les première et seconde bagues de roulement, respectivement.

Si c'est la solution à pièce de liaison côté pale qui est préférée, alors on conseillera:
- que, suivant un plan radial à l'axe de la pale, les première et deuxième bagues et la pale soient liées par une liaison unique, par laquelle passent (tous) les efforts s'exerçant à la fois sur les première et deuxième bagues, et qui n'est donc propre à aucune de ces bagues,
- et/ou que chacune des première et deuxième bagues soit fixée directement sur la pièce de liaison, et non sur la pale, cette pièce de liaison étant en outre, suivant un plan radial à l'axe de la pale, fixée à la pale par une liaison unique, par laquelle passent (tous) les efforts s'exerçant à la fois sur les première et deuxième bagues,
- et/ou que la première bague, qui est radialement la plus éloignée de l'axe de la pale, soit fixée directement sur la pièce de liaison, et non sur la pale, avec alors la deuxième bague qui (suivant un plan radial à l'axe de la pale) sera fixée à ladite pièce de liaison et à ladite pale par une liaison par laquelle passeront (tous) les efforts s'exerçant à la fois sur les première et deuxième bagues,
- et/ou que, pour l'une au moins des première et deuxième bagues, et suivant un plan radial à l'axe de la pale, les emplacements de fixation de la bague concernée sur la pièce de liaison et de liaison entre ladite bague et la pale soient situés à des distances radiales différentes de l'axe de la pale.

Les caractéristiques qui précèdent, voire celles qui suivent dans la description plus détaillée ci-après, favorisent la fiabilité des éoliennes concernées, ainsi que l'ergonomie de montage/démontage, en offrant une solution performante techniquement et financièrement.

A cet égard, pour une tenue radiale optimisée des roulements, on conseille que le palier comprenne en outre un élément ou une partie de retenue qui est lié mécaniquement à la pièce de liaison ou au moyeu de rotor, en étant retenu au moins radialement à l'axe de la pale par l'un ou l'autre, et qui, suivant une direction radiale à cet axe de pale, borde une surface périphérique extérieure de celle parmi lesdites bagues quoi est radialement la plus éloignée de l'axe de la pale, pour contrer un effort radial tendant à écarter entre elles certaines au moins desdites bagues et/ou à dévier cette bague radialement la plus éloignée de l'axe de la pale, lors de la rotation de la pale.

Suivant une variante, on envisage aussi que la première bague, qui est radialement la plus éloignée de l'axe de la pale, puisse présenter radialement une épaisseur plus importante vers son extrémité la plus proche de la pale que vers son extrémité la plus proche du moyeu de rotor, cette bague présentant en conséquence une surface périphérique extérieure ayant une génératrice non parallèle ou non continûment parallèle à l'axe de la pale.

Dans les exemples illustrés aux dessins annexés :
- la figure 1 est un schéma de face d'une éolienne conforme à l'invention,
- la figure 2 est une vue de côté,
- la figure 3 montre la section III-III, suivant un plan perpendiculaire aux axes, ici confondus, du moyeu de rotor et de la pale considérée,
- les figures 4,5,6 montrent trois variantes, suivant la même section,
- la figure 7 schématise les trois bagues seules des figures précédentes,
- la figure 8 est une variante de la figure 4 avec un autre type de roulements,
- et la figure 9 est une variante de la figure 3 avec un diamètre de pales plus important et donc unefixation de la bague extérieure à cette pale à travers la pièce de liaison.

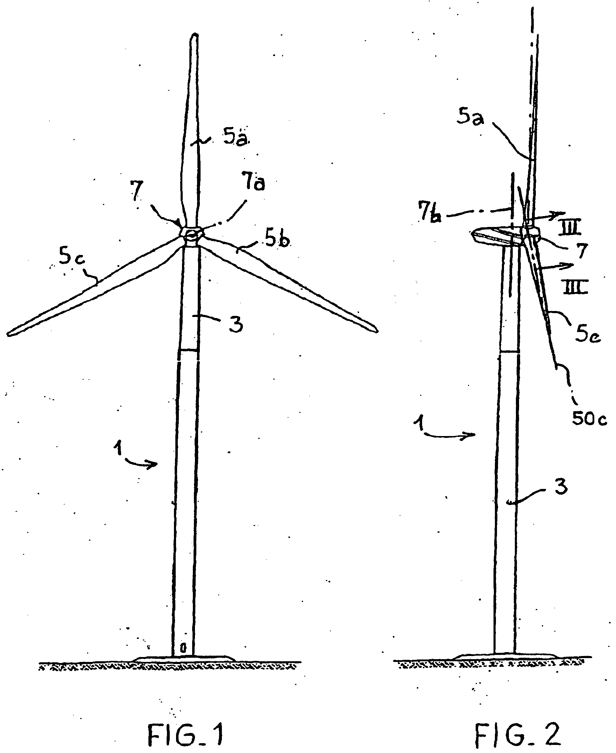

Figures 1 et 2, on voit une éolienne 1 comprenant un mât 3 en tête duquel trois pales 5a, 5b, 5c tournent autour de l'axe horizontal 7a d'un moyeu central 7.

Typiquement, le moyeu 7 est monté lui-même tournant autour d'un axe vertical 7b par rapport au mât 3, pour s'orienter au mieux vis-à-vis du vent.

Chaque pale, et en particulier la pale 5c de la figure 2 peut pivoter de quelques degrés ou dizaines de degrés autourde son axe d'allongement 50c, par rapport au moyeu de rotor 7, de manière à prendre au mieux le vent.

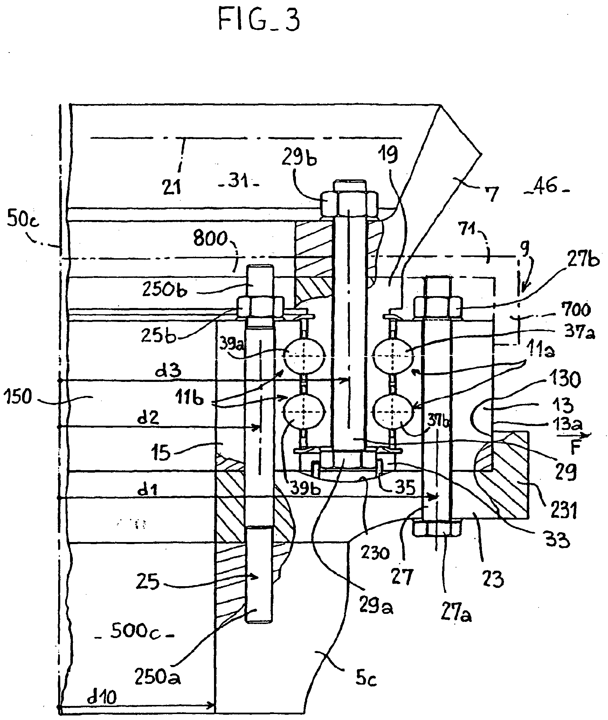

Figure 3, on retrouve en 50c l'axe de la pale 5c et en 7 le moyeu de rotor.

L'orientation angulaire privilégiée de chaque pale, telle que la pale 5c, génère en particulier des effort radiaux importants, ainsi que des moments de flexion élevés.

Le palier 9 illustré figure 3 est un palier à double rangée de roulements 11a, 11b.

Il comprend une bague extérieure 13, une bague intérieure 15 et une bague intermédiaire 19. Les trois bagues sont concentriques par rapport à l'axe 50c et s'étendent donc toutes suivant un plan général 21 radial à l'axe 50c.

La bague intermédiaire 19 est fixée sur le moyeu de rotor 7, tandis que les bagues extérieure 13 et intérieure 15 sont fixées à la pale de rotor 5c, par l'intermédiaire d'une pièce de liaison 23.

Suivant une direction générale parallèle à l'axe 50c, la pièce de liaison 23 assure, ici vis-à-vis de la pale 5c, la fixation directe à cette pale de la bague intérieure 15, via les moyens de fixation 25, tandis que la fixation à la pale de la bague extérieure 13 n'est qu'indirecte, puisqu'elle est fixée sur la pièce de liaison 23 par les moyens de fixation 27.

Sur la figure 3, dans le plan 21, la distance radiale d1 est supérieure à celle d2.

La première bague 13 se trouve radialement au-delà de la pale. Ainsi, ses moyens axiaux de fixation 27, ici des boulons, débouchent sur l'extérieur, à deux extrémités axiales opposées de la bague, et sont ici aisément accessibles, soit par la tête à pans de serrage 27a, soit par l'écrou 27b.

Les moyens de fixation 25, qui sont donc situés au diamètre intérieur d1, comprennent également chacun une tige filetée accessible depuis son extrémité de serrage 250b qui porte ici un écrou 25b et qui débouche face au volume intérieur creux 31 du moyeu de rotor 7.

On constate que ce volume 31 communique axialement avec le volume intérieur creux 500c de la pale ici figurée, via les volumes intérieurs intermédiaires successivement de la bague intérieure 15 et de la pièce de liaison 23 interposée parallèlement à l'axe 50c entre les bagues 13,15 et la pale, contre laquelle ces bagues viennent en appui.

A son autre extrémité axiale 250a, la tige filetée 25 est vissée dans le corps de la pale 5c.

Entre ces extrémités, la tige 25, sur sa partie non filetée, traverse la seconde bague 15 et la pièce de liaison 23.

Ainsi, les fixations sont ici axiales, ce qui est préférable, et ces fixations assurent au moins un passage d'efforts commun aux deux bagues 13,15, lesquelles sont donc fixées avec la pièce de liaison 23 à deux distances radiales différentes de l'axe de la pale.

Ici, la première bague 13 est fixée directement sur la pièce de liaison 23, et non sur la pale, tandis que la deuxième bague 15 l'est, avec et/ou à travers la pièce de liaison 23, assurant ainsi par une liaison avec la pale par laquelle passeront les efforts s'exerçant à la fois sur les première et deuxième bagues.

Au diamètre intermédiaire d3 se situent la première bague 19 et ses moyens de fixation 29, lesquels débouchent, à une extrémité, dans le volume 31 (écrou 29b) et, à l'autre (tête de tige à pans 29a), dans une chambre intérieure 33 limitée radialement par les parois respectivement extérieure et intérieure, cylindriques des deux bagues 15,13 et, axialement, à un bout par la paroi plane de la bague 19 où s'appuie la tête 29a, et à l'autre bout par une surface concave 230 de la pièce de liaison 23.

L'extrémité de serrage du boulon 29, qui débouche en 33, y est bloquée en rotation par des excroissances de retenue 35 fixées à la bague 19 ou à la pièce de liaison 23.

Ainsi, la bague 19 est fixée sur le moyeu 7 et son serrage, ici parallèle à l'axe 50c, peut s'opérer depuis le volume intérieur 31.

De cette façon, les moyens de fixation des trois bagues 13, 15, 19 seront aisément accessibles et chacune des bagues extrêmes 13, 15 est fixée sur la pièce intermédiaire de liaison radiale 23, et non directement sur la pale.

La fixation de cette pièce de liaison 23 sur la pale, suivant donc des liaisons situées suivant un unique rayon, comme le montre la figure 3, est telle qu'aucune liaison à la pale 5c n'est propre à aucune des deux bagues 13,15.

Figure 3, on note encore que la surface périphérique extérieure 13a de la bague extrême extérieure 13 est retenue au moins radialement à l'axe 50c de la pale concernée, par un élément de retenue 231 lié mécaniquement à la pièce de liaison 23, pour contrer un effort radial F tentant à écarter entre elles certaines au moins desdites bagues et/ou à dévier en particulier la bague 13, lors de la rotation de la pale ou, plus généralement, lors du fonctionnement de l'éolienne.

Ici, la partie de retenue 231 est intimement liée à la pièce de liaison 23 à laquelle est intégrée et qu'elle prolonge à la manière d'un épaulement sur lequel s'appuie radialement, dans la zone 130, la surface périphérique 13a de la bague 13.

En alternative, on pourrait imaginer une liaison par d'autres moyens, tels que des moyens de fixation (vissage, soudage.....), de sorte que la partie intégrée 231 pourrait former un élément physiquement distinct, bien que lié fixement et rigidement à la pièce liaison 23.

En alternative éventuelle, on pourrait ainsi imager, dans une solution a priori dégradée, que le moyeu de rotor 7 présente une excroissance radiale 71 pourvue d'un épaulement 700, venant en appui radial contre ladite surface extérieure 13a, mais du côté de l'extrémité opposée de la bague 13, c'est-à-dire vers son extrémité la plus proche du moyeu 7, axialement.

Eventuellement, cet épaulement 700 pourrait même appartenir à une pièce de liaison 800 (traits fantômes figure 3) interposée entre le moyeu 7 et la bague 19 et que traverseraient les moyens 29 pour se fixer dans le moyeu.

Entre la bague intermédiaire 19 et respectivement les première et deuxième bagues 13,15, se situent au moins deux séries de roulements.

Ici, il s'agit de roulements sphériques.

Dans la solution de la figure 3, on trouve deux rangées de roulements, telles que respectivement 37a, 37b et 39a, 39b agencés donc par groupe de deux, axialement décalés parallèlement à l'axe 50c, à deux distances radiales différentes suivant donc la direction 21.

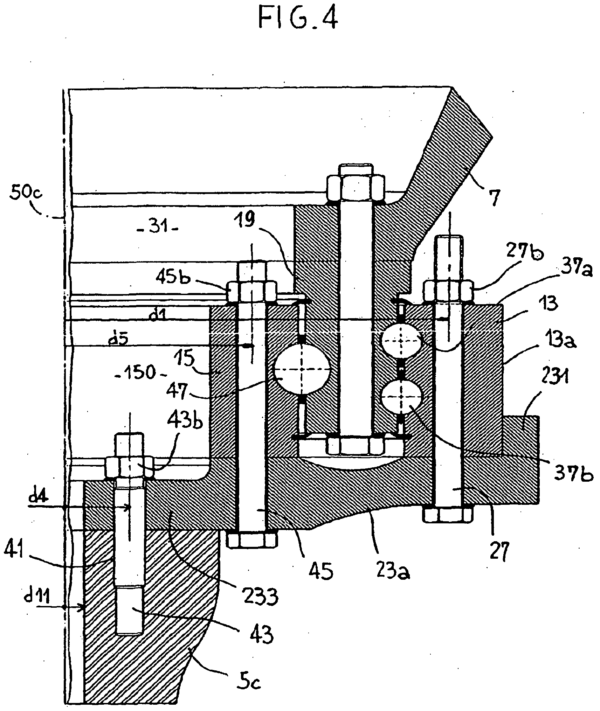

Sur la figure 4, on retrouve les mêmes éléments constitutifs et les mêmes dispositions que sur la figure 3, sauf pour ce qui concerne la fixation à la pale 5c de la pièce de liaison 23 (ici repérée 23a) et pour les billes de roulement qui sont maintenant au nombre de trois, encore qu'une disposition à quatre roulements comme sur la figure 3, en deux rangées de deux, pourrait tout à fait convenir.

Concernant la fixation de la pièce de liaison 23a, elle présente maintenant, en regard du volume intérieur 150 déjà cité, une partie pleine 233 pourvue d'orifices axiaux (parallèles à l'axe 50c) 41 situés à une distance radiale d4 de l'axe 50c inférieure à toutes les distances précitées d1, d2, d3 montrés figure 3. Ces orifices sont chacun traversés par l'un parmi plusieurs quatrièmes moyens de fixation 43 venant fixer, seule, la pièce de liaison 23a (qui a bien entendu la forme d'un anneau comme la pièce 23), et ce directement à la pale 5c, tandis que tant la première bague extérieure 13 que la seconde bague 15 sont fixées chacune uniquement à cette pièce de liaison 23a, à deux distances radiales différentes, ici respectivement d1 et d5.

Les moyens de fixation, ici identiques, correspondant aux boulons tels que 27 et 45, débouchent, d'un côté par leur tête de vissage à pans et, de l'autre, par l'extrémité filetée de leur tige pourvue des écrous 27b et 45b, sur l'extérieur, ou à l'intérieur du moyeu 7, dans le volume 31 pour la tige filetée correspondant au boulon 45.

Ainsi, les efforts transitant par les deux bagues extrêmes 13,15 vont passer dans la pièce de liaison 23a et être transmis à la pale 5c par les moyens de fixation 43, dont l'extrémité de la tige filetée est vissée dans cette pale et qui peut être serrée par la série d'écrous 43b à son extrémité opposée, à l'endroit où elle débouche en face du volume 150.

Pour les roulements, le troisième roulement 47 est à nouveau un roulement sphérique, mais il est d'un volume plus important que les autres roulements 37a, 37b.

Tant radialement qu'axialement (parallèlement à l'axe 50c), il est décalé par rapport auxdits roulements 37a, 37b. Ainsi, le troisième roulement 47 est situé entre les deux série de roulements 37a,37b de l'autre ligne, suivant une projection orthogonale sur l'axe 50c.

A la distance radiale d4 de l'axe 50c, la pièce de liaison 23a est donc fixée sur cette pale, tandis qu'aux distances d1 et d5, différentes, les première et troisième bagues 13, 15 sont individuellement fixées sur cette pièce de liaison 23a.

Figure 4, la liaison de la bague intermédiaire 19 est donc identique à celle de la figure 3.

Dans la solution de la figure 4, on pourrait bien entendu retrouver, en variante, les deux doubles lignes de roulements 37a, 37b et 39a, 39b de la figure 3.

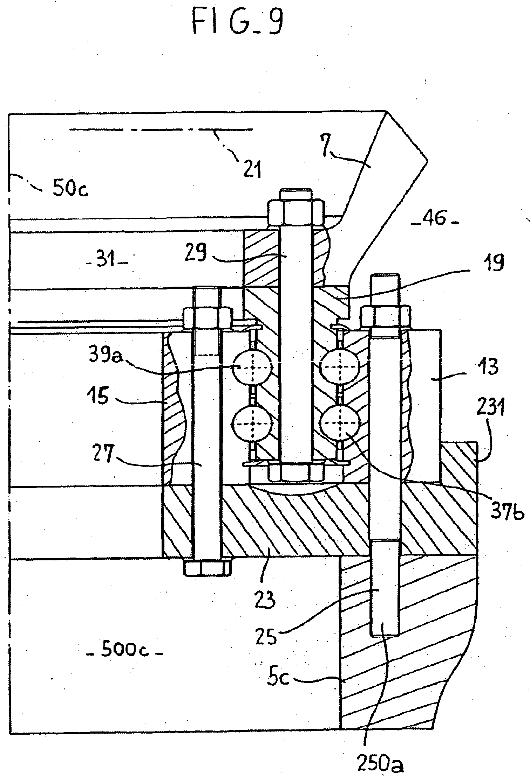

Eventuellement, dans une version où le diamètre des pales, et en particulier de la pale 5c, serait plus important que dans le cas de la figure 3, la fixation à cette pale à travers la pièce de liaison 23 pourrait s'opéreravec la bague extérieure 13, en remplacement de la bague intérieure 15 ; voir figure 9.

Pour une fixation parallèle à l'axe 50c, on pourrait ainsi en quelque sorte intervertir les moyens de fixation 25 et 27, de manière que la bague intérieure 15 soit fixée par les boulons 27 qui déboucheraient d'un côté sur le volume 31 et de l'autre sur le volume 500c (alors plus large radialement), tandis que la bague extérieure 13 serait axialement traversée par les moyens de fixation 25 qui d'un côté déboucheraient sur l'extérieur (zone 46 sur la figure 3) et, de l'autre, dans le corps même de la pale, via les filets 250a.

On remarquera que sur la figure 3 la partie filetée 250a ne se visse que dans le corps de la pale 5c, tandis qu'à l'opposé les filets 250b sont uniquement en prise avec l'écrou 25b.

Dans cette version privilégiée, la pièce 23 et les bagues 13, 15 ne sont pas taraudées.

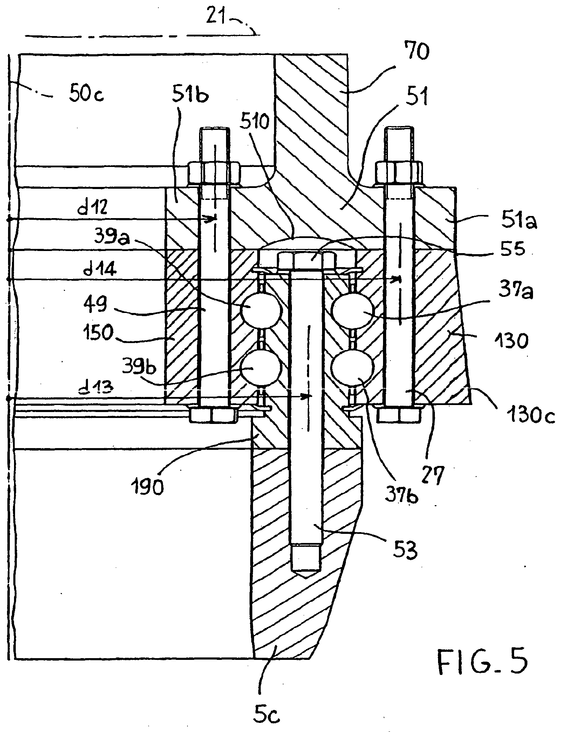

Figure 5, on retrouve un moyeu de rotor, ici repéré 70, ainsi que la pale d'éolienne 5c qui présente alors un diamètre légèrement plus important que dans le cas des figures 3 et 4.

Le palier comprend toujours une première bague extérieure (radialement à l'axe 50c) 130, une bague intérieure 150 et une bague intermédiaire 190.

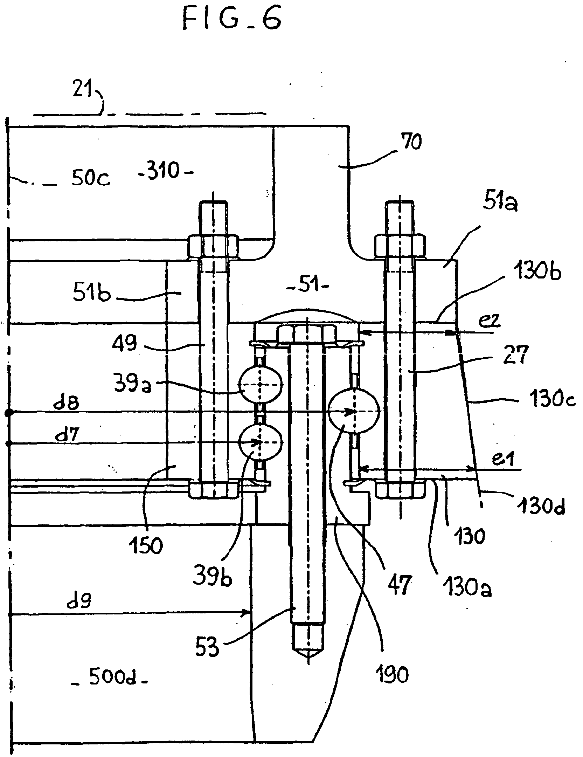

Les diamètres, par rapport à l'axe 50c, où sont fixées ces bagues sont différents entre eux ; voir d12, d13, d14 figure 5 qui s'appliquent également à la figure 6.

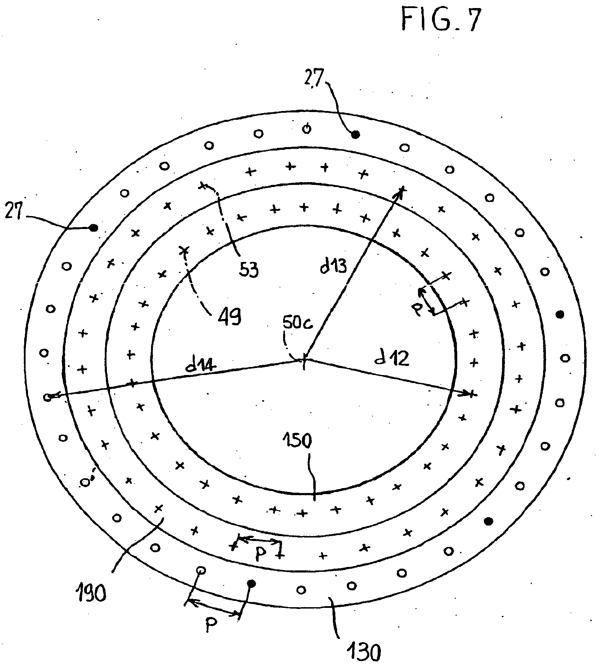

Figure 7, on a d'ailleurs illustré ces fixations : à chaque pas P, on trouve pour chaque bague une fixation soit à la pale, soit au moyeu, et ce à un même diamètre, comme on trouvait figure 3 à un même diamètre d2, et avec ce même pas P, une fixation de la bague intérieure 15 à la pale et, par la même, une liaison entre la bague 15, la pièce de liaison 23 et la pale. Figure 7, les roulements ne sont pas montrés.

Par rapport aux solutions décrites avant, celles des figures 5 et 6 montrent une fixation de la bague intermédiaire 190 dans l'emplanture de la pale 5c, tandis que les deux bagues extrêmes 130, 150 sont fixées directement sur le moyeu 70, le tout ici parallèlement à l'axe d'allongement 50c de la pale 5c.

Plus précisément, les moyens de fixation (27, 49 respectivement) de ces bagues sont directementfixés à la partie de liaison 51 liée intimement au moyeu de rotor 70 et s'étendant, suivant la direction 21 déjà citée, radialement à l'axe de la pale, jusqu'en regard des deux bagues extrêmes 130 et 150, avec une surface 510 localement concave, en face des moyens de fixation 53 par lesquels la bague intermédiaire 190 est fixée dans l'emplanture de la pale 5c.

Pour cela, les moyens de fixation 53 peuvent être identiques aux moyens 25 de la figure 3 et comprennent ici des tiges filetées dont la tête de serrage à pans 55 est logée dans la chambre fermée s'étendant en regard de la surface 510, à l'image de la chambre 33 de la figure 3.

Figure 6, on retrouve le même montage, à ceci près qu'au lieu des deux rangées à deux séries de roulements chacune 37a, 37b et 39a, 39b de la figure 5, on trouve la double rangée 39a, 39b au diamètre inférieur d7, tandis qu'au diamètre supérieur d8 on trouve la série de roulements sphériques de plus fort diamètre 47 déjà présentée.

En alternative, la série de roulements 47 pourrait être au diamètre d7 et les deux séries de double roulements sphériques de plus petit diamètre au diamètre d8, à l'image de ce qui est prévu figure 4.

Aux figures 5 et 6, il n'y a donc plus d'épaulement prévu sur une pièce de liaison rapportée comme aux figures 3 et 4, pour la retenue radiale de la bague extérieure 13.

En remplacement, la bague extérieure 130 la plus éloignée de l'axe 50c, présente radialement une épaisseur plus importante, telle que e1, vers son extrémité 130a la plus proche de la pale, tandis que vers son extrémité 130b la plus proche du moyeu de rotor 70 cette épaisseur diminue (voir épaisseur e2 figure 6, avec e2 inférieure à e1).

Ainsi, la bague 130 présente une surface périphérique extérieure 130c ayant une génératrice 130d non parallèle, ou non continuant parallèle, à l'axe 50c.

La surface périphérique extérieure 130c correspond ici à une paroi de biais par rapport à l'axe 50c. Il pourrait s'agir d'une marche ou d'un épaulement proche de l'extrémité 130a et augmentant l'épaisseur de e2 à e1.

De préférence, ce surcroît d'épaisseur radiale sera d'au moins 20%.

On remarquera que, figures 5 et 6, on retrouve les distances radiales différentes pour les bagues extrêmes 130, 150 fixées directement sur la partie de liaison 51 du moyeu de rotor, et pour la troisième bague 190 fixée dans l'emplanture de pale 5c.

Sur ces figures, la partie de liaison 51 est intégrée d'une seule pièce avec le moyeu de rotor 70 qu'elle étend, en section, à la manière d'un T dont la hampe prolonge axialement le corps du moyeu de rotor et dont la barre reçoit d'un côté (51a) la fixation serrée des moyens de fixation 27 et, de l'autre, 51 b, la fixation serrée des moyens de fixation 49 lesquels débouchent donc d'un côté dans le volume intérieur creux 310 du moyeu de rotor 70 et, à l'extrémité axiale opposée, en face du volume intérieur 500d de la pale 5c dont le diamètre intérieur d9 est légèrement supérieur à celui d10 de la pale de la figure 3, lequel était encore supérieur au diamètre d11 de la pale de la figure 4.

Figures 5 et 6, le volume intérieur 500d communique avec le volume intérieur 310 par le volume intérieur de la bague intermédiaire 190, ceux de la bague intérieure 150 et de l'extrémité formant la partie de liaison 51.

Eventuellement, seulement deux bagues auraient pu être prévues. On aurait pu supprimer la bague intérieure 15 (150) et donc les roulements entre elle et la bague 19 (ou 190).

Toutefois cette solution parait peu appropriée pour les grosses éoliennes. Des applications éventuelles des solutions ici proposées pourraient être envisagées en particulier pour des grues de grandes dimensions.

A noter encore que, radialement à l'axe de la pale, plutôt qu'une disposition comme fig.4 des quatrièmes (43), troisièmes (45) puis premiers (27) moyens de fixation successivement situés, suivant une distance croissante par rapport à cet axe, on pourrait prévoir l'ordre suivant: troisièmes 45, premiers 27 puis quatrièmes 43 moyens de fixation. Au lieu d'être radialement intérieure, la pale serait de plus grand diamètre que le moyeu 7. Fig.3, on pourrait également fixer la bague intérieure 15 uniquement à la pièce de liaison 23 et la bague extérieure 13 à une pale de plus grand diamètre, à travers cette pièce de liaison, faisant ainsi transiter par elle les efforts de la bague 15 et sa liaison à la pale.

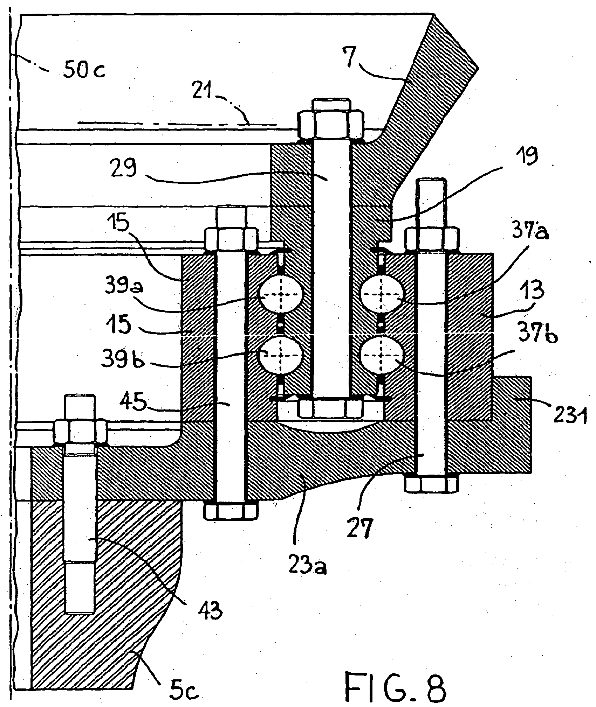

Figure 8, on a voulu montrer que, bien sûr, une solution à au moins quatre roulements sphériques 37a, 37b ; 39a, 39b pourrait être utilisée, en alternative aux trois roulements de la figure 4.

## Revendications

1. Ensemble pour éolienne, comprenant un moyeu de rotor d'éolienne, une pale d'éolienne et un palier pivotant de servomoteur interposé entre ledit moyeu de rotor d'éolienne (7, 70) et ladite pale d'éolienne (5c), cette pale et le palier présentant un axe, ledit ensemble comprenant en outre :
- une première et une seconde bagues de roulement (130, 150) présentant des diamètres différents, parallèlement à une direction (21) radiale à l'axe (50c) de la pale,
- une partie de liaison (51) s'étendant, parallèlement à ladite direction radiale à l'axe de la pale (5c), en regard des première et seconde bagues auxquelles elle est fixée par des premiers et seconds moyens de fixation (27, 49), respectivement,
- une troisième bague de roulement (190) située, radialement à l'axe de la pale, entre les première et deuxième bagues de roulement,
**caractérisé en ce que** :
- ladite partie de liaison (51), liée intimement au moyeu de rotor (7, 70), est interposée entre celui-ci et les première et deuxième bagues de roulement,
- la troisième bague de roulement est fixée à la pale,
- et les première et seconde bagues (130, 150) sont fixées ensemble sur ladite partie de liaison (51).

2. Ensemble selon la revendication 1, **caractérisé en ce que** :
- la pale (5c) présente une unique emplanture, et
- la troisième bague de roulement (190) est fixée sur cette unique emplanture par des troisièmes moyens de fixation (53)

3. Ensemble selon la revendication 1 ou 2, **caractérisé en ce que**:
- le moyeu de rotor (70) présente un axe parallèle à celui de la pale,
- et, suivant une section parallèle à l'axe du moyeu de rotor, ladite partie de liaison (51) définit un prolongement en T intégré d'une seule pièce audit moyeu de rotor et dont la barre (51a, 51b) reçoit les fixations entre cette partie de liaison et les première et seconde bagues de roulement (130, 150), respectivement.

4. Ensemble pour éolienne comprenant un moyeu de rotor (7, 70) d'éolienne, une pale (5c) d'éolienne et un palier pivotant de servomoteur interposé entre ledit moyeu de rotor (7, 70) d'éolienne et ladite pale (5c) d'éolienne, cette pale et le palier présentant un axe, ledit ensemble comprenant en outre :
- une première et une seconde bagues de roulement (13, 15) présentant des diamètres différents, parallèlement à une direction radiale à l'axe (50c) de la pale (5c),
- une pièce de liaison (23, 23a) interposée entre la pale et les première et seconde bagues (13, 15) et s'étendant, suivant une direction radiale à l'axe de ladite pale, en regard de ces première et seconde bagues avec lesquelles elle est liée,
- une troisième bague de roulement (19) située, radialement à l'axe de la pale, entre les première et deuxième bagues de roulement, cette troisième bague étant fixée au moyeu de rotor (7), et, l'une au moins parmi ladite pièce de liaison et les première et seconde bagues de roulement étant liée(s) avec la pale,
**caractérisé en ce que** l'une au moins parmi les première et seconde bagues (13, 15) est fixée sur la pièce de liaison (23, 23a) sans l'être sur la pale (5c) à laquelle elle est toutefois liée par l'intermédiaire de cette pièce de liaison.

5. Ensemble selon la revendication 4, **caractérisé en ce que**, suivant un plan radial à l'axe de la pale, les première et deuxième bagues (13, 15) et la pale (5c) sont liées ensemble par une liaison unique (25,43), par laquelle passent tous les efforts s'exerçant à la fois sur les première et deuxième bagues, et qui n'est donc propre à aucune de ces bagues.

6. Ensemble selon la revendication 4 ou 5, **caractérisé en ce que** chacune des première et deuxième bagues (13, 15) est fixée directement et uniquement sur la pièce de liaison (23a), donc pas sur la pale (5c), et cette pièce de liaison est, suivant un plan radial audit axe de la pale, fixée par ailleurs à cette pale par une liaison unique (43), par laquelle passent les efforts s'exerçant à la fois sur les première et deuxième bagues(13, 15).

7. Ensemble selon la revendication 4 ou 5, **caractérisé en ce que** :
- la première bague (13), qui est radialement la plus éloignée de l'axe de la pale (5c), est fixée directement et uniquement sur la pièce de liaison (23), donc pas sur cette pale, et
- la deuxième bague (15) est, suivant un plan radial audit axe de la pale, fixée à ladite pièce de liaison et à la pale (5c) par une liaison (25) par laquelle passent les efforts s'exerçant à la fois sur les première et deuxième bagues.

8. Ensemble selon l'une quelconque des revendications 4 à 7, **caractérisé en ce que**, pour l'une au moins des première et deuxième bagues (13, 15), et suivant un plan radial audit axe de la pale, les emplacements de fixation de la bague (13, 15) concernée sur la pièce de liaison (23, 23a) et de liaison entre ladite bague et la pale (5c) sont situés à des distances radiales différentes de l'axe de cette pale.

9. Ensemble selon l'une quelconque des revendications 4 à 7, **caractérisé en ce qu'**à une première distance radiale (d2, d6) dudit axe de la pale, la pièce de liaison (23, 23a) est traversée par un moyen (25, 43) de fixation à cette pale et, à une deuxième distance radiale (d1) de l'axe de ladite pale différente de la première distance radiale, la première bague (13) est fixée sur la pièce de liaison.

10. Ensemble selon l'une quelconque des revendications 4 à 9, **caractérisé en ce qu'**il comprend en outre un élément ou une partie de retenue (231, 700) qui est lié mécaniquement à la pièce de liaison (23, 23a, 51, 800) ou au moyeu de rotor (7, 70), en étant retenu au moins radialement audit axe de la pale par l'un ou l'autre, et qui, suivant une direction radiale à cet axe, borde une surface périphérique extérieure (13a) de celle parmi lesdites bagues qui est radialement la plus éloignée dudit axe de la pale, pour contrer un effort radial tendant à écarter entre elles certaines au moins desdites bagues et/ou à dévier cette bague (13) radialement la plus éloignée de l'axe de la pale, lors d'une rotation de cette pale.

11. Ensemble selon l'une quelconque des revendications 1 à 3, **caractérisé en ce que** la première bague (130), qui est radialement la plus éloignée de l'axe de la pale, présente radialement une épaisseur (e1) plus importante vers son extrémité la plus proche de ladite pale, qui est montée tournante autour dudit axe (50c), que vers son extrémité la plus proche du moyeu de rotor, cette bague présentant en conséquence une surface périphérique extérieure (130c) ayant une génératrice (130d) non parallèle ou non continûment parallèle à l'axe de ladite pale.

12. Ensemble selon l'une quelconque des revendications précédentes, **caractérisé en ce que** :
- le palier comprend des première, seconde et troisième séries de roulements (37a, 37b ; 39a, 39b ; 47), l'une au moins de ces séries s'étendant entre les première et troisième bagues (13, 15, 19 ; 130, 150, 190), et la/les séries restante(s) s'étendant entre les troisième et seconde bagues,
- et entre soit les première et troisième bagues, soit les troisième et seconde bagues, s'étend une seule une série de roulements, avec des roulements (47):
* qui sont plus gros que ceux (37a, 37b, 39a, 39b) des deux autres séries,
* et qui sont situés entre ceux de ces deux autres séries de roulements, suivant une projection orthogonale sur ledit axe (50c).

13. Ensemble selon la revendication 4 ou 5, **caractérisé en ce que** :
- la première bague (13), qui est radialement la plus éloignée de l'axe de la pale (5c), est fixée à ladite pièce de liaison (23) et à la pale (5c) par une liaison (25) par laquelle passent les efforts s'exerçant à la fois sur les première et deuxième bagues, et
- la deuxième bague (15) est fixée directement et uniquement sur la pièce de liaison (23), donc pas sur cette pale.

14. Ensemble selon l'une quelconque des revendications 4 à 10, 12 ou 13 rattachée à l'une d'elles, **caractérisé en ce que** la pale (5c) présente une unique emplanture, et la pièce de liaison (23, 23a) est fixée sur cette emplanture unique de la pale (5c).

## Patentansprüche

1. Baugruppe für eine Windenergieanlage, eine Windrad-Rotornabe, einen Windradflügel und ein Servomotor-Schwenklager umfassend, das zwischen der besagten Windrad-Rotornabe (7, 10) und dem besagten Windradflügel (5c) eingesetzt ist, wobei dieser Flügel und das Lager eine Achse aufweisen, und die besagte Baugruppe darüber hinaus folgendes umfasst:
- einen ersten und einen zweiten Lagerring (130, 150), die unterschiedliche Durchmesser aufweisen, parallel zu einer radialen Richtung (21) zur Achse (50c) des Flügels,
- einen Verbindungsabschnitt (51), der sich parallel zur besagten radialen Richtung zur Achse des Flügels (5c) gegenüber dem ersten und dem zweiten Ring erstreckt, an denen er jeweils durch erste und zweite Befestigungsmittel (27, 49) befestigt ist,
- einen dritten Lagerring (190), der sich radial zur Achse des Flügels zwischen dem ersten und dem zweiten Lagerring befindet,
**dadurch gekennzeichnet, dass**:
der besagte Verbindungsabschnitt (51), der eng mit der Rotornabe (7, 70) verbunden ist, zwischen dieser und dem ersten und dem zweiten Lagerring angeordnet ist,
- der dritte Lagering am Flügel befestigt ist,
- und der erste und der zweite Ring (130, 150) gemeinsam auf dem besagten Verbindungsabschnitt (51) befestigt sind.

2. Baugruppe nach Anspruch 1, **dadurch gekennzeichnet, dass**:
- der Flügel (5c) eine einzige Flügelwurzel aufweist, und
- der dritte Lagerring (190) durch dritte Befestigungsmittel (53) auf dieser einzigen Flügelwurzel befestigt ist.

3. Baugruppe nach Anspruch 1 oder 2, **dadurch gekennzeichnet, dass**:
- die Rotornabe (70) eine parallele Achse zu jener des Flügels aufweist,
- und, der besagte Verbindungsabschnitt (51) entlang einem parallelen Abschnitt zur Achse der Rotornabe eine Verlängerung in Form eines T definiert, die in einem einzigen Stück in die besagte Rotornabe integriert ist, und deren Balken (51a, 51b) die Befestigungen zwischen diesem Verbindungsabschnitt und jeweils dem ersten und dem zweiten Lagerring (130, 150) aufnimmt.

4. Baugruppe für eine Windenergieanlage, eine Windrad-Rotornabe (7, 70), einen Windradflügel (5c) und ein Servomotor-Schwenklager umfassend, das zwischen der besagten Windrad-Rotornabe (7, 70) und dem besagten Windradflügel (5c) eingesetzt ist, wobei dieser Flügel und das Lager eine Achse aufweisen, und die besagte Baugruppe darüber hinaus folgendes umfasst:
- einen ersten und einen zweiten Lagerring (13, 15), die unterschiedliche Durchmesser aufweisen, parallel zu einer radialen Richtung zur Achse (50c) des Flügels (5c),
- ein Verbindungsstück (23, 23a), das zwischen dem Flügel und dem ersten und dem zweiten Ring (13, 15) eingesetzt ist, und sich entsprechend einer radialen Richtung zur Achse des besagten Flügels gegenüber dem ersten und dem zweiten Ring erstreckt, mit denen es verbunden ist,
- einen dritten Lagerring (19), der sich radial zur Achse des Flügels zwischen dem ersten und dem zweiten Lagerring befindet, wobei dieser dritte Ring an der Rotornabe (7) befestigt ist, und zumindest eines der Teile des besagten Verbindungsstücks und des ersten und zweiten Lagerrings mit dem Flügel verbunden ist,
**dadurch gekennzeichnet, dass** zumindest einer des ersten und des zweiten Ringes (13, 15) auf dem Verbindungsstück (23, 23a) befestigt ist, ohne auf dem Flügel (5c) befestigt zu sein, mit dem er jedoch über dieses Verbindungsstück verbunden ist.

5. Baugruppe nach Anspruch 4, **dadurch gekennzeichnet, dass** der erste und der zweite Ring (13, 15) und der Flügel (5c) entlang einer radialen Ebene zur Achse des Flügels über eine einzige Verbindung (25, 43) miteinander verbunden sind, durch die sämtliche Kräfte verlaufen, die zugleich auf den ersten und den zweiten Ring ausgeübt werden und die somit keinem dieser Ringe eigen ist.

6. Baugruppe nach Anspruch 4 oder 5, **dadurch gekennzeichnet, dass** jeder des ersten und des zweiten Ringes (13, 15) direkt und ausschließlich auf dem Verbindungsstück (23a), und somit nicht auf dem Flügel (5c) befestigt ist, und dieses Verbindungsstück entlang einer radialen Ebene zur besagten Achse des Flügels darüber hinaus über eine einzige Verbindung (43) mit diesem Flügel verbunden ist, durch die die Kräfte verlaufen, die zugleich auf den ersten und den zweiten Ring (13, 15) ausgeübt werden.

7. Baugruppe nach Anspruch 4 oder 5, **dadurch gekennzeichnet, dass**:
- der erste Ring (13), der radial am weitesten von der Achse des Flügels (5c) entfernt ist, direkt und ausschließlich am Verbindungsstück (23) befestigt ist, und somit nicht auf diesem Flügel, und
- der zweite Ring (15) entlang einer radialen Ebene zur besagten Achse des Flügels durch eine Verbindung (25) am besagten Verbindungsstück und am Flügel (5c) befestigt ist, durch die die Kräfte verlaufen, die zugleich auf den ersten und den zweiten Ring ausgeübt werden.

8. Baugruppe nach einem der Ansprüche 4 bis 7, **dadurch gekennzeichnet, dass** die Befestigungsstellen des betroffenen Ringes (13, 15) auf dem Verbindungsstück (23, 23a), sowie der Verbindung zwischen dem besagten Ring und dem Flügel (5c) für zumindest einen des ersten und des zweiten Ringes (13, 15) und entlang einer radialen Ebene zur besagten Achse des Flügels in radialen Abständen angeordnet sind, die sich von der Achse dieses Flügels unterscheiden.

9. Baugruppe nach einem der Ansprüche 4 bis 7, **dadurch gekennzeichnet, dass** ein Mittel zur Befestigung (25, 43) auf diesem Flügel in einem ersten radialen Abstand (d2, d6) zur besagten Achse des Flügels durch das Verbindungsstück (23, 23a) führt, und der erste Ring (13) in einem zweiten radialen Abstand (d1) von der Achse des besagten Flügels, der sich vom ersten radialen Abstand unterscheidet, auf dem Verbindungsstück befestigt ist.

10. Baugruppe nach einem der Ansprüche 4 bis 9, **dadurch gekennzeichnet, dass** sie darüber hinaus ein Halteelement oder einen Halteabschnitt (231, 700) umfasst, das (der) mechanisch mit dem Verbindungsstück (23, 23a, 51, 800) oder mit der Rotornabe (7, 70) verbunden ist, indem es (er) zumindest durch das (den) eine(n) oder andere(n) radial zu der besagten Achse des Flügels gehalten wird, und das (der) entlang einer radialen Richtung zu dieser Achse eine externe umlaufende Fläche (13a) jenes der besagten Ringe umrandet, der radial am weitesten von der besagten Achse des Flügels entfernt liegt, um einer radialen Kraft entgegenzuwirken, die dazu tendiert, zumindest einige der besagten Ringe auseinanderzudrücken und/ oder diesen radial am weitesten von der Achse des Flügels entfernt liegenden Ring (13) bei einer Drehung dieses Flügels abzulenken.

11. Baugruppe nach einem der Ansprüche 1 bis 3, **dadurch gekennzeichnet, dass** der erste Ring (130), der radial am weitesten von der Achse des Flügels entfernt liegt, radial eine Dicke (e1) aufweist, die zum besagten Flügel, der drehend um die besagte Achse (50c) montiert ist, am nächsten gelegenen Ende hin größer ist, als jene zu seinem der Rotornabe am nächsten gelegenen Ende hin, wobei dieser Ring infolgedessen eine externe umlaufende Fläche (130c) aufweist, die eine Mantelline (130d) besitzt, die nicht parallel oder nicht durchgehend parallel zur Achse des besagten Flügels verläuft.

12. Baugruppe nach irgendeinem der vorherigen Ansprüche, **dadurch gekennzeichnet, dass**:
- das Wälzlager eine erste, zweite und dritte Lagerreihen (37a, 37b; 39a, 39b; 47) aufweist, wobei sich zumindest eine dieser Reihen zwischen dem ersten und dem dritten Ring (13, 15, 19; 130, 150, 190) erstreckt, und sich die verbleibende(n) Reihe(n) zwischen dem dritten und dem zweiten Ring erstrecken,
- und sich zwischen entweder dem ersten und dem dritten Ring, oder dem dritten und dem zweiten Ring eine einzige Lagerreihe mit Lagern (47) erstreckt:
-- die größer sind, als jene (37a, 37b; 39a, 39b) der beiden anderen Reihen,
-- und die sich entlang einer zur besagten Achse (50c) senkrechten Projektion zwischen jenen dieser beiden anderen Lagerreihen befinden.

13. Baugruppe nach Anspruch 4 oder 5, **dadurch gekennzeichnet, dass**:
- der erste Ring (13), der radial am weitesten von der Achse des Flügels (5c) entfernt ist, durch eine Verbindung (25) auf dem besagten Verbindungsstück (23) und auf dem Flügel (5c) befestigt ist, durch die jene Kräfte verlaufen, die zugleich auf den ersten und den zweiten Ring ausgeübt werden, und
- der zweite Ring (15) direkt und ausschließlich auf dem Verbindungsstück (23) befestigt ist, und somit nicht auf diesem Flügel.

14. Baugruppe nach einem der Ansprüche 4 bis 10, 12 oder 13, in Verbindung mit einem von ihnen, **dadurch gekennzeichnet, dass** der Flügel (5c) eine einzige Flügelwurzel aufweist, und das Verbindungsstück (23, 23a) auf dieser einzigen Flügelwurzel des Flügels (5c) befestigt ist.

## Claims

1. Assembly for wind turbine, comprising a wind turbine rotor hub, a wind turbine blade and a servomotor pivoting bearing interposed between said wind turbine rotor hub (7, 70) and said wind turbine blade (5c), this blade and the bearing having an axis, said assembly further comprising:
- a first and a second bearing rings (130, 150) having different diameters, parallel to a direction (21) radial to the axis (50c) of the blade,
- a connecting portion (51) extending, parallel to said direction radial to the axis of the blade (5c), opposite first and second rings to which the connecting portion is fixed by first and second means of fastening (27, 49), respectively,
- a third bearing ring (190) located, radially to the axis of the blade, between the first and second bearing rings,
**characterised in that**:
- said connecting portion (51), closely linked to the rotor hub (7, 70), is interposed between the latter and the first and second bearing rings,
- the third bearing ring is fixed to the blade,
- and the first and second rings (130, 150) are fixed together on said connecting portion (51).

2. Assembly according to claim 1, **characterised in that**:
- the blade (5c) has a single wing root, and
- the third bearing ring (190) is fixed on this single wing root by third means of fastening (53)

3. Assembly according to claim 1 or 2, **characterised in that**:
- the rotor hub (70) has an axis parallel to that of the blade,
- and, according to a section parallel to the axis of the rotor hub, said connecting portion (51) defines a T-shaped extension forming one single part with said rotor hub and of which the bar (51a, 51b) receives the fastenings between this connecting portion and the first and second bearing rings (130, 150), respectively.

4. Assembly for wind turbine comprising a wind turbine rotor hub (7, 70), a wind turbine blade (5c) and a servomotor pivoting bearing interposed between said wind turbine rotor hub (7, 70) and said wind turbine blade (5c), with this blade and the bearing having an axis, said assembly further comprising:
- a first and a second bearing rings (13, 15) having different diameters, parallel to a direction radial to the axis (50c) of the blade (5c),
- a connecting part (23, 23a) interposed between the blade and the first and second rings (13, 15) and extending, according to a direction radial to the axis of said blade, opposite these first and second rings with which the connecting part (23, 23a) is linked,
- a third bearing ring (19) located, radially to the axis of the blade, between the first and second bearing rings, with this third ring being fixed to the rotor hub (7), and, at least one among said connecting part and the first and second bearing rings being linked with the blade,
**characterised in that** at least one among the first and second rings (13, 15) is fixed on the connecting part (23, 23a) without being connected on the blade (5c) to which at least one among the first and the second rings (13, 15) is however connected by the intermediary of this connecting part.

5. Assembly according to claim 4, **characterised in that**, according to a plane radial to the axis of the blade, the first and second rings (13, 15) and the blade (5c) are linked together by a single connection (25, 43), through which passes all of the forces being exerted on both the first and second rings, and which therefore is not proper to any of these rings.

6. Assembly according to claim 4 or 5, **characterised in that** each one of the first and second rings (13, 15) is fixed directly and solely on the connecting part (23a), therefore not on the blade (5c), and this connecting part is, according to a plane radial to said axis of the blade, fixed moreover to this blade by a single connection (43), through which pass the forces applied both on the first and second rings (13, 15).

7. Assembly according to claim 4 or 5, **characterised in that**:
- the first ring (13), which is radially the farthest from the axis of the blade (5c), is fixed directly and solely on the connecting part (23), therefore not on said blade, and
- the second ring (15) is, according to a plane radial to said axis of the blade, fixed to said connecting part and to the blade (5c) by a connection (25) through which pass the forces applied both on the first and second rings.

8. Assembly according to any of claims 4 to 7, **characterised in that**, for at least one of the first and second rings (13, 15), and according to a plane radial to said axis of the blade, the locations of the fastening of the ring (13, 15) concerned on the connecting part (23, 23a) and of the connection between said ring and the blade (5c) are located at different radial distances from the axis of said blade.

9. Assembly according to any of claims 4 to 7, **characterised in that** at a first radial distance (d2, d6) from said axis of the blade, the connecting part (23, 23a) is passed through by a means (25, 43) of fastening to this blade and, at a second radial distance (d1) from the axis of said blade that is different from the first radial distance, the first ring (13) is fixed on the connecting part.

10. Assembly according to any of claims 4 to 9, **characterised in that** it further comprises an element or a retaining portion (231, 700) which is mechanically linked to the connecting part (23, 23a, 51, 800) or to the rotor hub (7, 70), by being retained at least radially to said axis of the blade by one or the other, and which, according to a direction radial to this axis, borders an external peripheral surface (13a) of that among said rings which is radially the farthest away from said axis of the blade, in order to counter a radial force that tends to separate between them at least some of said rings and/or to divert this ring (13) radially the farthest from the axis of the blade, during a rotation of this blade.

11. Assembly according to any of claims 1 to 3, **characterised in that** the first ring (130), which is radially the farthest from the axis of the blade, radially has a thickness (e1) that is greater towards its end that is the closest to said blade, which is mounted rotating about said axis (50c), than towards its end that is closest to the rotor hub, with this ring consequently having an external peripheral surface (130c) that has a generating line (130d) that is non-parallel or not continuously parallel to the axis of said blade.

12. Assembly as claimed in any preceding claim, **characterised in that**:
- the bearing comprises first, second and third series of bearings (37a, 37b; 39a, 39b; 47), with at least one of these series extending between the first and third rings (13, 15, 19; 130, 150, 190), and the remaining series extending between the third and second rings,
- and between either the first and third rings, or the third and second rings, extends a single series of bearings, with bearings (47):
-- which are larger than those (37a, 37b, 39a, 39b) of the two other series,
-- and which are located between those of these two other series of bearings, according to an orthogonal projection on said axis (50c).

13. Assembly according to claim 4 or 5, **characterised in that**:
- the first ring (13), which is radially the farthest from the axis of the blade (5c), is fixed to said connecting part (23) and to the blade (5c) by a connection (25) through which pass the forces applied both on the first and second rings, and
- the second ring (15) is fixed directly and solely on the connecting part (23), therefore not on said blade.

14. Assembly according to any of claims 4 to 10, 12 or 13 attached to one of claims 4 to 10, **characterised in that** the blade (5c) has a single wing root, and the connecting part (23, 23a) is fixed on this single wing root of the blade (5c).
